# EUROPÄISCHE PATENTSCHRIFT

(11) **EP 2 490 052 B1**
(45) Veröffentlichungstag und Bekanntmachung des Hinweises auf die Patenterteilung: **11.04.2018**
(21) Anmeldenummer: 11192931.1
(22) Anmeldetag: 12.12.2011
(51) Int. Cl.: G02B 6/00, B60Q 1/00

(54) **Beleuchtungseinrichtung eines Kraftfahrzeugs**
Illumination device of a motor vehicle
Dispositif d'éclairage d'un véhicule automobile

(30) Priorität: 17.02.2011 DE 102011004349
(43) Veröffentlichungstag der Anmeldung: 22.08.2012
(73) Patentinhaber: Automotive Lighting Reutlingen GmbH, 72762 Reutlingen (DE)
(72) Erfinder: Zwick, Hubert, 70173 Stuttgart (DE)
(74) Vertreter: DREISS Patentanwälte PartG mbB

(56) Entgegenhaltungen:
- EP-A1- 2 327 585
- EP-A2- 2 442 013
- CA-A1- 2 685 108
- DE-A1- 10 249 113
- DE-A1- 10 336 162
- DE-A1-102008 021 290
- JP-A- 2002 251 907

## Beschreibung

Die vorliegende Erfindung betrifft eine Beleuchtungseinrichtung eines Kraftfahrzeugs gemäß dem Oberbegriff des Anspruchs 1.

Eine derartige Beleuchtungseinrichtung ist beispielsweise aus der CA 2 685 108 A1 bekannt. Die Hauptabstrahlrichtung ist dabei ausgehend von der mindestens einen Reflexionsfläche weg von dem Lichtleiter gerichtet, so dass das an der mindestens einen Reflexionsfläche reflektierte Licht den Lichtleiter nicht durchstrahlt. Die aus der CA 2 685 108 A1 bekannte Beleuchtungseinrichtung weist einen plattenförmigen Lichtleiter mit einer Auskoppelfläche auf, wobei auf der Auskoppelfläche Auskoppelelemente angeordnet sind.

Ferner ist aus der DE 10 2008 016 764 A1 eine Beleuchtungseinrichtung bekannt, bei der die Hauptabstrahlrichtung des von den Reflexionsflächen reflektierten Lichts durch den Lichtleiter hindurch verläuft, so dass das reflektierte Licht den Lichtleiter durchstrahlt. Dies kann zu Einschränkungen hinsichtlich der Effizienz und des Wirkungsgrads der bekannten Beleuchtungseinrichtung führen, da an den Grenzflächen zwischen Lichtleiter und Luft, d.h. an den Lichteinkoppelfläche und den Lichtauskoppelflächen, fresnelsche Verluste im Bereich von mindestens 10% auftreten können, die vom Auftreffwinkel der Lichtstrahlen auf die Flächen abhängig sind. Ferner stellen die bekannten Beleuchtungseinrichtungen strenge Anforderungen an die Ausgestaltung der Lichtleiter. Insbesondere müssen in den von dem Licht zu durchdringenden Bereichen des Lichtleiters die Lichtleiterflächen parallel zueinander sein, da sonst die Richtung des hindurchtretenden Lichts aufgrund der Brechung an den Flächen verändert wird. Das bedeutet eine starke Einschränkung für mögliche Formen der Lichtleiter der bekannten Beleuchtungseinrichtungen. Schließlich kann abhängig von der Einbausituation der Beleuchtungseinrichtung bzw. des Lichtleiters der Fall eintreten, dass ein Teil des reflektierten und durch den Lichtleiter hindurch tretenden Lichts auf ein Auskoppelelement des Auskoppelbereichs trifft und in unerwünschter und unkontrollierbarer Weise abgelenkt wird.

Auskoppelelemente des Auskoppelbereichs bzw. Auskoppelflächen der Auskoppelelemente und Reflexionsflächen sind derart relativ zueinander angeordnet und ausgerichtet und die Reflexionsflächen sind derart geformt, dass das von den Reflexionsflächen in Hauptabstrahlrichtung reflektierte Licht den Lichtleiter nicht durchstrahlt. Eine derartig ausgestaltete Beleuchtungseinrichtung hat somit eine höhere Effizienz und einen besseren Wirkungsgrad, da fresnelsche Verluste an den Lichtleiterflächen aufgrund des nicht vorhandenen Durchtritts des an den Reflexionsflächen reflektierten Lichts durch den Lichtleiter weitgehend vermieden werden.

Der vorliegenden Erfindung liegt die Aufgabe zugrunde, die Effizienz der aus dem Stand der Technik bekannten Beleuchtungseinrichtungen weiter zu verbessern.

Zur Lösung dieser Aufgabe wird eine Beleuchtungseinrichtung mit den Merkmalen des Anspruchs 1 vorgeschlagen. Insbesondere ist bei der erfindungsgemäßen Beleuchtungseinrichtung der Lichtleiter stabförmig ausgebildet und sind die Auskoppelelemente auf drei verschiedenen, aneinander grenzenden Außenseiten des Lichtleiters angeordnet, wobei jeweils drei, auf verschiedenen Außenseiten des Lichtleiters angeordneten Auskoppelelementen mindestens eine Reflexionsfläche zugeordnet ist.

Bei einem Lichtleiter mit rechteckigem oder quadratischem Querschnitt können die Auskoppelelemente auf drei aneinandergrenzenden Außenseiten eines Lichtleiters angeordnet sein. Bei einem Lichtleiter mit rundem oder ovalem Querschnitt könnten Auskoppelelemente auf der gewölbten Umfangsfläche an drei Stellen bspw. um 90° oder etwas weniger versetzt zueinander angeordnet sein oder an zwei Stellen in einem beliebigen Winkel zwischen <180° und 10° zueinander versetzt angeordnet sein. Dementsprechend sind dann auf den verschiedenen Außenseiten des Lichtleiters auch den Auskoppelelementen bzw. den Auskoppelflächen zugeordnete Reflexionsflächen angeordnet. Dabei kann am Beispiel eines stabförmig ausgebildeten Lichtleiters das in diesen eingekoppelte Licht auf drei Seiten ausgekoppelt und von allen Reflexionsflächen in eine gemeinsame Hauptabstrahlrichtung reflektiert werden. Selbstverständlich wäre es auch denkbar, dass die Reflexionsflächen das Licht in unterschiedliche Hauptabstrahlrichtungen reflektieren. Durch die Anordnung von Auskoppelelementen auf mehreren Seiten des Lichtleiters ergibt sich eine besonders effiziente und gegenüber den Abmessungen des Lichtleiters großflächige Abstrahlung des ausgekoppelten Lichts.

Schließlich wird durch die erfindungsgemäße Beleuchtungseinrichtung auch eine unerwünschte und unkontrollierbare Ablenkung von an den Reflexionsflächen reflektierten und auf die Auskoppelelemente der Auskoppelbereiche treffenden Lichtstrahlen vermieden.

Bei der erfindungsgemäßen Beleuchtungseinrichtung können grundsätzlich beliebige Lichtquellen zum Aussenden des Lichts verwendet werden, das über die mindestens eine Einkoppelfläche in den Lichtleiter eingekoppelt wird. Gemäß einer vorteilhaften Weiterbildung der vorliegenden Erfindung wird jedoch vorgeschlagen, dass die Beleuchtungseinrichtung mindestens eine Halbleiterlichtquelle, insbesondere mindestens eine Leuchtdiode (LED), zum Aussenden des in den Lichtleiter einzukoppelnden Lichts aufweist. Halbleiterlichtquellen, insbesondere LEDs, eignen sich besonders gut für den Einsatz in einer Kraftfahrzeugbeleuchtungseinrichtung, da sie kleinbauend, leicht, robust, energiesparend und langlebig sind. Durch die geringen Abmessungen der Halbleiterlichtquellen können diese sehr gut auch vor relativ klein dimensionierten Einkoppelflächen des Lichtleiters angeordnet werden.

Ferner kann der Lichtleiter gerade oder gebogen ausgebildet sein. Vorzugsweise ist der Lichtleiter derart gebogen, dass er der Form einer Kraftfahrzeugkarosserie, in welche die Beleuchtungseinrichtung mit dem Lichtleiter eingebaut ist, oder der Form eines Scheinwerfers, insbesondere einer Abdeckscheibe des Scheinwerfers, in den der Lichtleiter eingebaut ist, folgt.

Der Lichtleiter der erfindungsgemäßen Beleuchtungseinrichtung kann bspw. als ein langgestreckter Stab mit einem runden, ovalen, rechteckigen oder beliebig anderem. Querschnitt ausgebildet sein, der sich entlang einer Vorderseite eines Scheinwerfers unmittelbar hinter der Abdeckscheibe des Scheinwerfers quer über die gesamte Breite des Scheinwerfers oder zumindest einen Teil davon erstreckt. Insbesondere ist der Lichtleiter an einer Unterseite oder einer Oberseite des Scheinwerfers angeordnet und verläuft entlang einem unteren bzw. oberen Rand der Abdeckscheibe. Um bei Kraftfahrzeugen mit einem besonders flachen und windschnittigen Frontbereich einer möglichen Pfeilung der Scheinwerfer, insbesondere der Abdeckscheibe eines Scheinwerfers, zu folgen, ist der Lichtleiter bei in das Kraftfahrzeug eingebauter Beleuchtungseinrichtung vorzugsweise an dem zu einer Fahrzeugaußenseite hin gerichteten Ende nach hinten gebogen. Ferner ist es denkbar, dass der Lichtleiter der erfindungsgemäßen Beleuchtungseinrichtung ringförmig ausgebildet ist und bspw. eine Projektionslinse oder einen Reflektor eines Lichtmoduls des Scheinwerfers außen umgibt.

Die erfindungsgemäße Beleuchtungseinrichtung mit dem Lichtleiter dient zur Realisierung einer beliebigen Beleuchtungsfunktion in einem Front- oder Heckbereich eines Kraftfahrzeugs, aber auch seitlich des Fahrzeugs. Die Beleuchtungsfunktion kann eine Leuchtenfunktion, aber auch eine Scheinwerferfunktion sein. Als Leuchtenfunktion kann durch die Beleuchtungseinrichtung bspw. ein Positionslicht, ein Tagfahrlicht, ein Blinklicht, ein Rücklicht, ein Bremslicht, ein Nebelrücklicht, ein Rückfahrlicht oder ein Sidemarker-Licht realisiert werden. Als Scheinwerferfunktion kann bspw. ein Abblendlicht, ein Stadtlicht, ein Landstraßenlicht, ein Autobahnlicht, ein Fernlicht, ein Nebellicht oder eine beliebig andere adaptive Scheinwerferfunktion realisiert werden.

Der Einkoppelbereich des Lichtleiters umfasst mindestens eine Einkoppelfläche, die bspw. eine Stirnfläche des Lichtleiters sein kann. Die als Einkoppelfläche dienende Stirnfläche kann entweder eben oder in einer beliebig anderen Form zur Verbesserung der Einkopplung der von der Lichtquelle ausgesandten Lichtstrahlen in den Lichtleiter ausgebildet sein. Denkbar ist bspw. eine zylindersegmentförmige oder kugelsegmentförmige, konkave oder konvexe Wölbung der Einkoppelfläche. Ferner wäre es denkbar, die Einkoppelfläche mit einer optisch wirksamen Struktur zu versehen, bspw. mit der Struktur einer Fresnellinse oder mit einer Mikrostrukturierung.

Das in den Lichtleiter eingekoppelte Licht wird mittels Totalreflexion an den äußeren Grenzflächen des Lichtleiters entlang der Längsachse des Lichtleiters weiter geleitet. Lichtstrahlen, die dabei auf ein Auskoppelelement des Auskoppelbereichs treffen, werden zumindest teilweise aus dem Lichtleiter ausgekoppelt und verlassen diesen über eine Auskoppelfläche des Auskoppelelements. Dabei ist besonders vorteilhaft, wenn die Auskoppelflächen der Auskoppelelemente im Wesentlichen senkrecht zu der entsprechenden (unmittelbar angrenzenden) Außenfläche des Lichtleiters, d.h. zu den Grenzflächen des Lichtleiters, ausgerichtet sind. Die Auskoppelflächen können eben oder in einer beliebigen anderen Form ausgebildet sein, um das Auskoppeln des Lichts besonders effizient zu gestalten und um ein Auskoppeln des Lichts in eine gewünschte Auskoppelrichtung sicherzustellen. Insbesondere ist es denkbar, dass die Auskoppelfläche zylindersegmentförmig oder kugelsegmentförmig konkav oder konvex gewölbt ausgebildet ist. Ferner ist es denkbar, auf der Auskoppelfläche lichtablenkende Elemente vorzusehen, bspw. eine Fresnelstruktur oder eine Mikrostrukturierung oder andere Strukturen.

Die Auskoppelelemente der Auskoppelbereiche sind vorzugsweise quaderförmig, würfelförmig, kugelsegmentförmig, zylindersegmentförmig oder sägezahnförmig ausgebildet. Bei einem kugel- oder zylindersegmentförmig ausgestalteten Auskoppelelement ist es offensichtlich, dass die Auskoppelfläche nur in unmittelbarer Nähe zu der Außenseite (Grenzfläche) des Lichtleiters, auf der das Auskoppelelement angeordnet ist, senkrecht zu der Außenseite bzw. der Grenzfläche ausgerichtet sein kann. Mit zunehmendem Abstand von der Außenseite bzw. der Grenzfläche des Lichtleiters wird die Neigung der Auskoppelfläche bzgl. der Flächenerstreckung der Außenseite bzw. der Grenzfläche immer kleiner. Die Ausrichtung einer kugel- oder zylindersegmentförmigen Auskoppelfläche relativ zu der Flächenerstreckung der Außenseite bzw. Grenzefläche des Lichtleiters kann also abhängig vom Abstand zu der Außenseite bzw. Grenzefläche zwischen 90° und 0° variieren.

Es ist denkbar, dass einer der Reflexionsflächen mehrere Auskoppelelemente bzw. mehrere Auskoppelflächen zugeordnet sind. Gemäß einer anderen bevorzugten Weiterbildung der vorliegenden Erfindung wird jedoch vorgeschlagen, dass jeweils mindestens einem der Auskoppelelemente eine der Reflexionsflächen zugeordnet ist. Vorteilhafterweise ist jeweils genau einem der Auskoppelelemente eine separate Reflexionsfläche zugeordnet. Besonders bevorzugt ist jeweils genau einer Auskoppelfläche eines Auskoppelelements eine separate Reflexionsfläche zugeordnet. Die Reflexionsflächen sind Bestandteil eines Reflektorelements. Das Reflektorelement ist als ein von dem Lichtleiter separates Bauteil ausgebildet. Es kann aus Kunststoff oder Metall gefertigt sein, wobei eine Oberfläche des Reflektorelements poliert oder mit einer spiegelnden Beschichtung versehen wird, um die Reflexionsfläche zu bilden. Ferner ist es denkbar, dass mehrere funktional getrennte Reflexionsflächen, die in räumlicher Nähe zueinander angeordnet sind, integraler Bestandteil eines einzigen gemeinsamen Reflektorelements sind. Es ist sogar denkbar, dass alle Reflektorelemente einer Beleuchtungseinrichtung als ein einziges, separat handhabbares Bauteil ausgebildet sind. Dieses Bauteil mit den Reflektorelementen ist vorzugsweise derart ausgebildet, dass keine Hinterschnitte entstehen, so dass die Ausgestaltung einer Spritzgussform vereinfacht sowie ein Entformen des Bauteils aus einer Spritzgussform erleichtert wird. Durch das Zusammenfassen aller Reflektorelemente in einem einzigen Bauteil kann die Montage der Beleuchtungseinrichtung, insbesondere die Positionierung und Befestigung der Reflexionsflächen relativ zu den Lichtauskoppelflächen der Auskoppelelemente, deutlich vereinfacht und beschleunigt werden.

Des Weiteren wird vorgeschlagen, dass die mindestens eine Reflexionsfläche eine Paraboloidform aufweist. Alternativ kann die Reflexionsfläche auch eine von einer Paraboloidform abweichende Form aufweisen. Insbesondere ist es denkbar, dass die Reflexionsfläche gebildet wird, indem ausgehend von einer Grundform, die bspw. ein Paraboloid ist, mehrere diskrete Punkte der Grundform derart variiert werden, dass eine gewünschte resultierende Lichtverteilung der Beleuchtungseinrichtung möglichst gut erzielt wird. Je mehr Punkte der Reflexionsfläche bestimmt werden, desto genauer kann die gewünschte Lichtverteilung erzielt werden. Eine Punkt-für-Punkt berechnete Reflexionsfläche wird als Freiform-Reflexionsfläche bezeichnet. Ein Freiform-Reflektor kann mittels geeigneter Computerprogramme (sog. ray-tracing Programme) berechnet werden. Die mindestens eine Reflexionsfläche kann zumindest bereichsweise mit Facetten versehen sein. Die einzelnen Facetten können durch Knicke, Kanten oder Stufen auf der Reflexionsfläche sichtbar sein oder aber bündig ineinander übergehen, so dass die einzelnen Facetten mit bloßem Auge nicht erkennbar sind. Die Auskoppelfläche der Auskoppelelemente ist vorzugsweise in einem Brennpunkt, im Bereich einer Brennpunktwolke (bei einem Freiformreflektor) oder in einer Brennebene der zugeordneten Reflexionsfläche angeordnet.

Schließlich wird gemäß einer bevorzugten Weiterbildung der Erfindung vorgeschlagen, dass die Beleuchtungseinrichtung ein im Strahlengang des durch die Reflexionselemente reflektierten Lichts angeordnetes optisches Element aufweist. Das optische Element umfasst beispielsweise eine Streuscheibe, die das hindurchtretende Licht in mindestens einer gewünschten Richtung streut. Besonders bevorzugt ist, wenn das optische Element ein Lichtleitelement umfasst, in welches zumindest ein Teil des durch die Reflexionselemente reflektierten Lichts einkoppelt, das eingekoppelte Licht in dem Lichtleitelement mittels Totalreflexion zu einer Auskoppelfläche des Lichtleitelements gelangt und die Auskoppelfläche des optischen Elements mit Streuelementen zum Streuen des durch die Auskoppelfläche hindurchtretenden Lichts in mindestens einer gewünschten Richtung versehen ist. Ein solches Lichtleitelement ist bspw. hohlzylinderförmig ausgebildet und weist vorzugsweise einen kreisringförmigen Querschnitt auf. Dabei bildet eine der ringförmigen Grundflächen den Lichteinkoppelbereich und die gegenüberliegende Grundfläche den Lichtauskoppelbereich.

Weitere Merkmale und Vorteile der vorliegenden Erfindung werden nachfolgend anhand der Figuren näher erläutert. Dabei kann die vorliegende Erfindung die angegebenen Merkmale und Vorteile entweder einzeln oder in einer beliebigen Kombination miteinander aufweisen. Es zeigen:
- Figur 1: eine Beleuchtungseinrichtung gemäß einer nicht von der vorliegenden Erfindung umfassten Ausführungsform in einer perspektivischen Ansicht;
- Figur 2: die Beleuchtungseinrichtung aus Figur 1 in einer Seitenansicht;
- Figur 3: die Beleuchtungseinrichtung aus Figur 1 in einer Draufsicht;
- Figur 4: die Beleuchtungseinrichtung aus Figur 1 in einer Frontalansicht;
- Figur 5: eine erfindungsgemäße Beleuchtungseinrichtung gemäß einer bevorzugten Ausführungsform in einer perspektivischen Ansicht;
- Figur 6: die Beleuchtungseinrichtung aus Figur 5 in einer Seitenansicht;
- Figur 7: die Beleuchtungseinrichtung aus Figur 5 in einer Draufsicht;
- Figur 8: die Beleuchtungseinrichtung aus Figur 5 in einer Frontalansicht;
- Figur 9: eine nicht von der vorliegenden Erfindung umfasste Ausführungsform einer Beleuchtungseinrichtung;
- Figur 10: die-Beleuchtungseinrichtung aus Figur 9 in einer Detailansicht;
- Figur 11: einen Teil einer Beleuchtungseinrichtung gemäß einer nicht von der vorliegenden Erfindung umfassten Ausführungsform;
- Figur 12: die Beleuchtungseinrichtung aus Figur 11 mit Reflexionsflächen;
- Figur 13: die Beleuchtungseinrichtung aus Figur 12 mit einem in Hauptabstrahlrichtung der Reflexionsflächen angeordneten hohlzylinderförmigen optischen Element;
- Figur 14: die Beleuchtungseinrichtung aus Figur 13 mit beispielhaft eingezeichneten Lichtstrahlverläufen; und
- Figur 15: die Beleuchtungseinrichtung aus Figur 14 in einer Detailansicht.

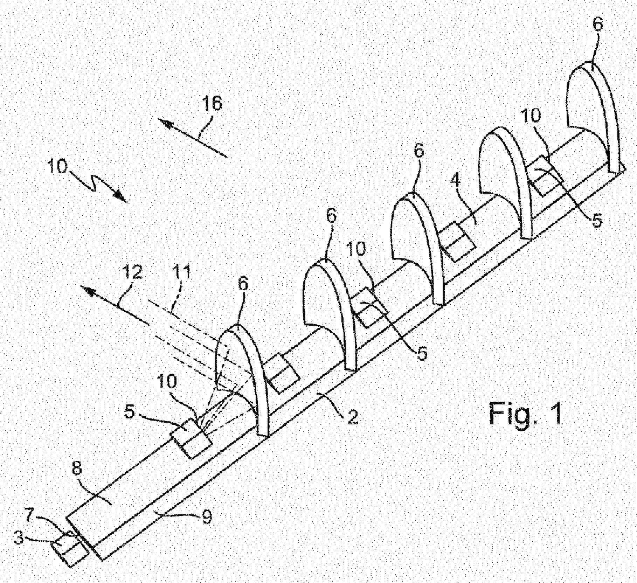

In Figur 1 ist eine Beleuchtungseinrichtung gemäß einer nicht von der vorliegenden Erfindung umfassten Ausführungsform in ihrer Gesamtheit mit dem Bezugszeichen 1 bezeichnet. Die Beleuchtungseinrichtung kann in einem eigenen Gehäuse, vorzugsweise aus Kunststoff, angeordnet sein, oder aber in einem Gehäuse eines Kraftfahrzeugscheinwerfers angeordnet sein. Die Beleuchtungseinrichtung 1 kann zur Erzeugung einer beliebigen Leuchtenfunktion, bspw. Positionslicht, Tagfahrlicht oder Blinklicht, oder zur Erzeugung einer beliebigen Scheinwerferfunktion, bspw. Abblendlicht, Stadtlicht, Landstraßenlicht, Autobahnlicht, Fernlicht, Nebellicht oder einer beliebigen anderen dynamischen oder adaptiven Lichtfunktion, ausgebildet sein. Die Beleuchtungseinrichtung 1 kann aber auch in einem Gehäuse einer Fahrzeugheckleuchte angeordnet sein. Dabei könnte die Beleuchtungseinrichtung 1 bspw. ein Rücklicht, ein Bremslicht, ein Rückfahrlicht, ein Nebelschluss, ein Blinklicht oder eine beliebig andere Leuchtenfunktion erzeugen. Falls die Beleuchtungseinrichtung 1 ein separates Gehäuse aufweist, kann sie an einer beliebigen Stelle im Front-, Heck- oder Seitenbereich eines Kraftfahrzeugs angeordnet sein. Bei im Seitenbereich des Fahrzeugs angeordneter Beleuchtungseinrichtung 1 kann diese bspw. ein Sidemarker-Licht erzeugen. Es ist sogar denkbar, dass die Beleuchtungseinrichtung 1 zur Erzeugung mehrerer unterschiedlicher Scheinwerfer- oder Leuchtenfunktionen ausgebildet ist (z.B. Positionslicht und Tagfahrlicht; Sidemarker-Licht und Blinklicht; Rücklicht und Bremslicht etc.). Diese können bspw. durch Variation eines Betriebsstroms von Lichtquellen der Beleuchtungseinrichtung 1 erzeugt werden.

Die Beleuchtungseinrichtung 1 weist in dem in Figur 1 gezeigten Ausführungsbeispiel einen geraden und platten- bzw. stabförmigen Lichtleiter 2 mit einem rechteckigen Querschnitt auf. Der Lichtleiter 2 ist aus einem transparentem Material, bspw. Glas oder Kunststoff, gefertigt. Außerdem umfasst die Beleuchtungseinrichtung 1 eine als Halbleiterlichtquelle, insbesondere als Leuchtdiode (LED), ausgebildete Lichtquelle 3 auf. Die Lichtquelle 3 könnte auch mehrere LEDs, insbesondere mehrere neben- bzw. übereinander matrixangeordnete LEDs (sog. LED-Array), oder eine LED mit mehreren LED-Chips (sog. multichip LED) aufweisen. Ferner könnte die Lichtquelle 3 auch andere Arten von Lichtquellen, bspw. eine Glühlampe, eine Gasentladungslampe oder eine Lichtauskoppelfläche eines weiteren Lichtleiters aufweisen.

In dem gezeigten Ausführungsbeispiel ist eine Oberseite des Lichtleiters 2 als ein Auskoppelbereich 4 ausgebildet. Der Auskoppelbereich 4 umfasst mehrere, in dem dargestellten Ausführungsbeispiel fünf, in einem Abstand zueinander angeordnete Auskoppelelemente 5 auf. Die Auskoppelelemente 5 sind vorzugsweise aus dem gleichen Material wie der Lichtleiter 2 und in einem Stück mit diesem gefertigt, so dass sie als integraler Bestandteil des Lichtleiters 2 bezeichnet werden können. Die Auskoppelelemente 5 sind in dem dargestellten Ausführungsbeispiel würfelförmig ausgebildet. Jedem der Auskoppelelemente 5 ist eine Reflexionsfläche 6 zugeordnet. Die Reflexionsflächen 6 sind in einem festen definierten Bezug zu den Auskoppelelementen 5 in der Beleuchtungseinrichtung 1 angeordnet.

Eine der Stirnflächen des Lichtleiters 2 ist als ein flächenförmiger Lichteinkoppelbereich, also als eine Lichteintrittsfläche 7, ausgebildet. Zumindest ein Teil des von der LED 3 ausgesandten Lichts wird über die Lichteinkoppelfläche 7 in den Lichtleiter 2 eingekoppelt. Zu diesem Zweck kann die Lichteinkoppelfläche 7 eben oder in beliebiger Weise, bspw. kugelsegmentförmig oder zylindersegmentförmig konkav oder konvex gewölbt sein. Ferner kann die Lichteinkoppelfläche 7 mit beliebigen optisch wirksamen Elementen, bspw. einer Fresnelstruktur oder einer Mikrostruktur, versehen sein, um Einkoppelverluste zu reduzieren. Darüber hinaus ist es denkbar, dass das von der LED 3 ausgesandte Licht zunächst gebündelt wird, bevor es in den Lichtleiter 2 eingekoppelt wird. Zum Bündeln des von der LED 3 ausgesandten Lichts kann bspw. eine Vorsatzoptik (nicht dargestellt) aus einem transparenten Material mit totalreflektierenden Eigenschaften verwendet werden. Zumindest ein Teil des von der LED 3 ausgesandten Lichts wird über eine Lichteinkoppelfläche in die Vorsatzoptik eingekoppelt, zumindest ein Teil des eingekoppelten Lichts wird an äußeren Grenzflächen der Vorsatzoptik totalreflektiert und das eingekoppelte Licht dann über eine Lichtauskoppelfläche der Vorsatzoptik in Richtung der Lichteinkoppelfläche 7 des Lichtleiters 2 ausgesandt. Die Vorsatzoptik bündelt das von der LED 3 ausgesandte Licht mittels Brechung an der Lichteinkoppel- und der Lichtauskoppelfläche sowie mittels Totalreflexion an den äußeren Grenzflächen der Vorsatzoptik.

Das über die Lichteinkoppelfläche 7 in den Lichtleiter 2 eingekoppelte Licht wird in dem Lichtleiter 2 durch Totalreflexion an den äußeren Grenzflächen des Lichtleiters 2, also an den Wandungen an der Ober- und Unterseite 8 des Lichtleiters 2 sowie an den seitlichen Wandungen 9 des Lichtleiters 2, durch den Lichtleiter 2 hindurchgeleitet. Diejenigen der in dem Lichtleiter 2 mittels Totalreflexion weitergeleiteten Lichtstrahlen, die auf eines der Auskoppelelemente 5 treffen, werden über eine Auskoppelfläche 10 des Auskoppelelements 5 in Richtung der zugeordneten Reflexionsfläche 6 aus dem Lichtleiter 2 ausgekoppelt. Die Auskoppelflächen 10 verlaufen im Wesentlichen senkrecht zu der Flächenerstreckung der Licht leitenden Oberseite 8 (Grenzfläche) des Lichtleiters 2.

Das über die Auskoppelflächen 10 ausgekoppelte Licht tritt in einem (maximal) 90°-Halbkegel aus den Auskoppelelementen 5 aus, wobei eine ebene Fläche des Lichtkegels parallel auf der lichtleitenden Oberseite 8 des Lichtleiters 2 aufliegt. Die Menge des an einem Auskoppelelement 5 ausgekoppelten Lichts kann durch die Größe des Auskoppelelements 5 sowie durch die Anzahl der Auskoppelelemente 5 pro Längeneinheit vorgegeben werden. Die Richtung des ausgekoppelten Lichtkegels kann durch die Form der Auskoppelelemente 5, insbesondere durch die Ausgestaltung der Auskoppelflächen 10, bestimmt werden. So ist es bspw. denkbar, dass die Auskoppelflächen 10 nicht eben, sondern bspw. kugelsegmentförmig oder zylindersegmentförmig konkav oder konvex gewölbt sind. Ferner ist es denkbar, dass die Auskoppelflächen 10 mit einer optisch wirksamen Struktur, bspw. mit Fresnellinsen-Elementen oder einer Mikrostruktur, versehen sind.

Jedem Auskoppelelement 5 ist eine eigene Reflexionsfläche 6 zugeordnet. Die Reflexionsflächen 6 sind in dem in Figur 1 gezeigten Ausführungsbeispiel als Paraboloide ausgebildet. Die als virtuelle Lichtquellen dienenden Auskoppelflächen 10 der Auskoppelelemente 5 liegen jeweils im Brennpunkt des zugeordneten paraboloidförmigen Reflektors 6, wodurch die Reflexionsfläche 6 das auf sie treffende Licht in einer Hauptabstrahlrichtung 12 in etwa parallel zu einer Rotationsachse des Paraboloiden abstrahlt. In dem dargestellten Beispiel verlaufen die Hauptabstrahlrichtungen 12 der einzelnen Reflexionselemente 6 parallel zueinander, so dass eine Hauptabstrahlrichtung 16 der gesamten Beleuchtungseinrichtung 1 parallel zu den einzelnen Hauptabstrahlrichtungen 12 verläuft. Es ist deutlich zu erkennen, dass die in Hauptabstrahlrichtung reflektierten Lichtstrahlen 11 nicht mehr den Lichtleiter 2 durchdringen, sondern weg von diesem gerichtet sind. Durch Variation der Reflektorgeometrie oder durch eine auf die Reflexionsfläche 6 aufgebrachte Facettierung können beliebige, insbesondere auch gesetzlich vorgegebene Lichtverteilungen durch eine Überlagerung der von den einzelnen Reflexionsflächen 6 reflektierten Teil-Lichtbündel erzeugt werden.

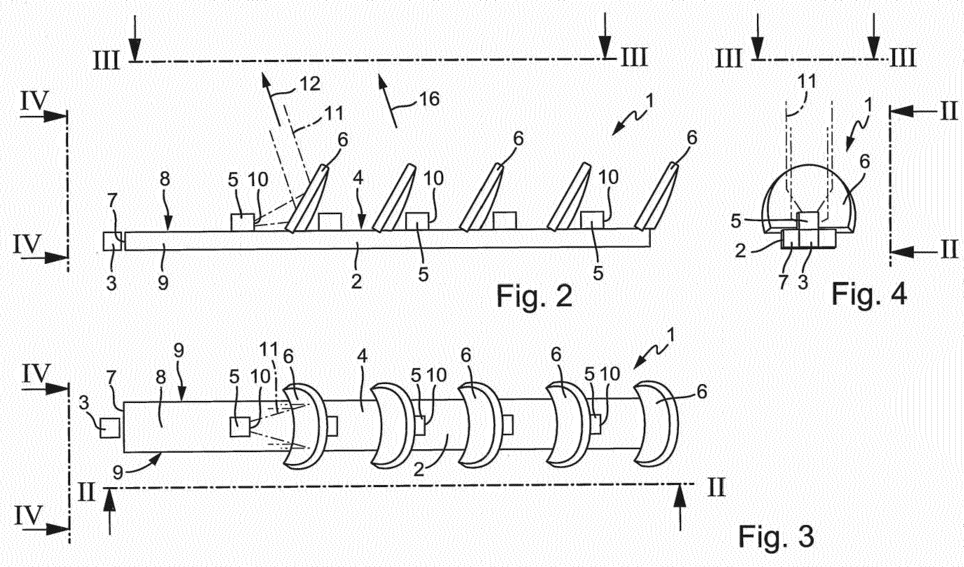

Die Figuren 2 bis 4 zeigen weitere Ansichten der Beleuchtungseinrichtung aus Figur 1. Dabei sind identische Bauteile mit den gleichen Bezugszeichen wie in Figur 1 bezeichnet.

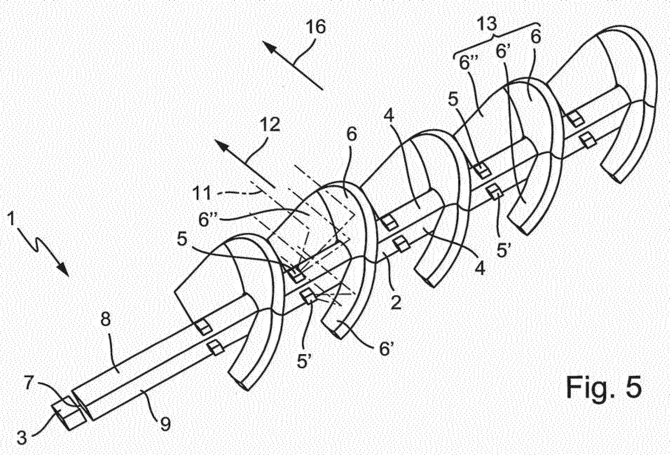

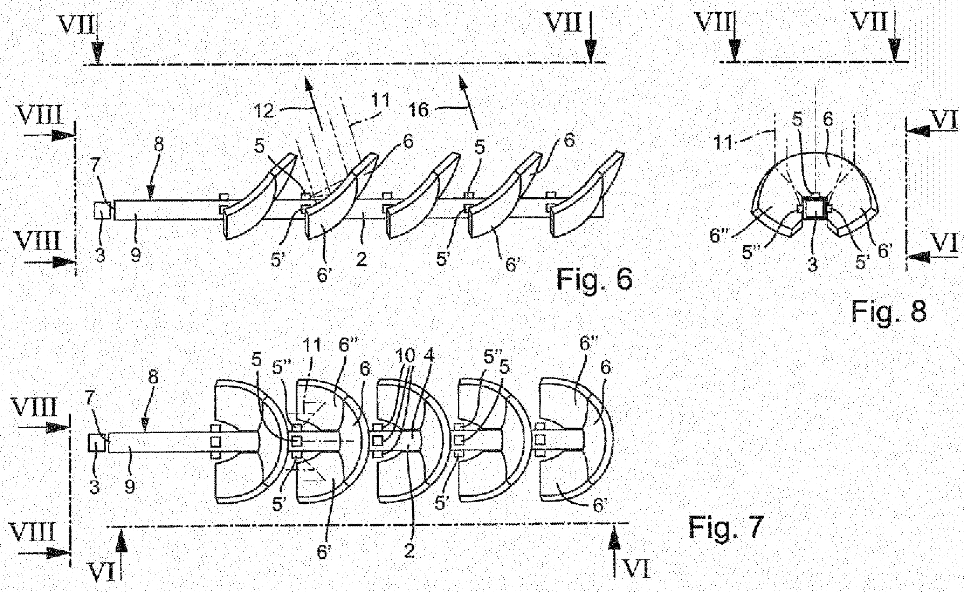

In Figur 5 ist ein bevorzugtes Ausführungsbeispiel der erfindungsgemäßen Beleuchtungseinrichtung 1 gezeigt. Im Unterschied zu dem Ausführungsbeispiel der Figuren 1 bis 4 hat der Lichtleiter 2 keinen rechteckigen, sondern einen quadratischen Querschnitt. Ferner umfasst der Auskoppelbereich 4 des Lichtleiters 2 nicht nur einen Teil der Wandung 8 an der Oberseite des Lichtleiters 2, sondern auch die Wandungen 9 zu beiden Seiten des Lichtleiters 2. Das bedeutet, dass bei dem zweiten Ausführungsbeispiel der Figur 5 Lichtauskoppelelemente 5 nicht nur auf der Wandung 8 der Oberseite des Lichtleiters 2, sondern auch auf den Wandungen 9 zu beiden Seiten des Lichtleiters 2 angeordnet sind. In Figur 5 sind die auf der zum Betrachter gerichteten Seite 9 des Lichtleiters 2 angeordneten Auskoppelelemente mit dem Bezugszeichen 5' bezeichnet. Die auf der vom Betrachter weg gerichteten Seite 9 des Lichtleiters 2 angeordneten Auskoppelelemente sind mit dem Bezugszeichen 5" bezeichnet, jedoch in Figur 5 nicht dargestellt, da sie von dem Lichtleitelement 2 verdeckt sind. Die Auskoppelelemente 5" sind jedoch in den Figuren 7 und 8 dargestellt.

Jedem der Lichtleitelemente 5, 5", 5" ist eine eigene Reflexionsfläche 6, 6', 6" zugeordnet. Dabei sind die nebeneinander angeordneten Reflexionsflächen 6, 6', 6" vorzugsweise zu einem einzigen, gemeinsamen Reflektorelement 13 zusammengefasst. Die Reflexionsflächen 6, 6', 6" eines Reflektorelements 13 gehen vorzugsweise bündig ineinander über. Zwischen den einzelnen Reflexionsflächen 6, 6', 6" eines Reflektorelements 13 können aber auch Knicke, Kanten oder Stufen ausgebildet sein. Auch in diesem Ausführungsbeispiel sind die Reflexionsflächen 6, 6', 6" vorzugsweise als Paraboloide ausgebildet, wobei diese vorzugsweise parallel zueinander verlaufende Rotationsachsen aufweisen. Die von den Reflexionsflächen 6, 6', 6" reflektierten Lichtstrahlen 11 verlaufen vorzugsweise parallel zueinander in Richtung 12. Die von den verschiedenen Reflektorelementen 13 (jeweils mit Reflexionsflächen 6, 6', 6") reflektierten Lichtstrahlen 11 verlaufen ebenfalls alle im Wesentlichen parallel zueinander und parallel zur Richtung 12, so dass die Hauptabstrahlrichtung 16 der Beleuchtungseinrichtung 1 ebenfalls parallel zu der Richtung 12 verläuft. Die Reflexionsflächen 6, 6', 6" der verschiedenen Reflektorelemente 13 haben vorzugsweise die gleichen Brennweiten. Sie können sich aber hinsichtlich ihrer Brennpunkte auch voneinander unterscheiden, insbesondere die Reflexionsflächen 6, 6', 6" desselben Reflektorelements 13.

Die Figuren 6 bis 8 zeigen das zweite Ausführungsbeispiel der Figur 5 in verschiedenen Ansichten. Identische Bauteile sind auch hier mit den gleichen Bezugszeichen bezeichnet.

Eine weitere (nicht dargestellte) Ausführungsform der vorliegenden Erfindung kann darin bestehen, dass eine gewünschte resultierende Lichtverteilung der Beleuchtungseinrichtung 1 nicht ausschließlich durch die Geometrie oder einer Facettierung der Reflexionsflächen 6 bzw. 6, 6", 6" erzeugt wird, sondern durch eine im Strahlengang der reflektierten Lichtstrahlen 11 angeordnete Streuscheibe, die eine Streuung des reflektierten Lichts 11 in mindestens eine Richtung, bspw. in horizontaler Richtung, bewirkt.

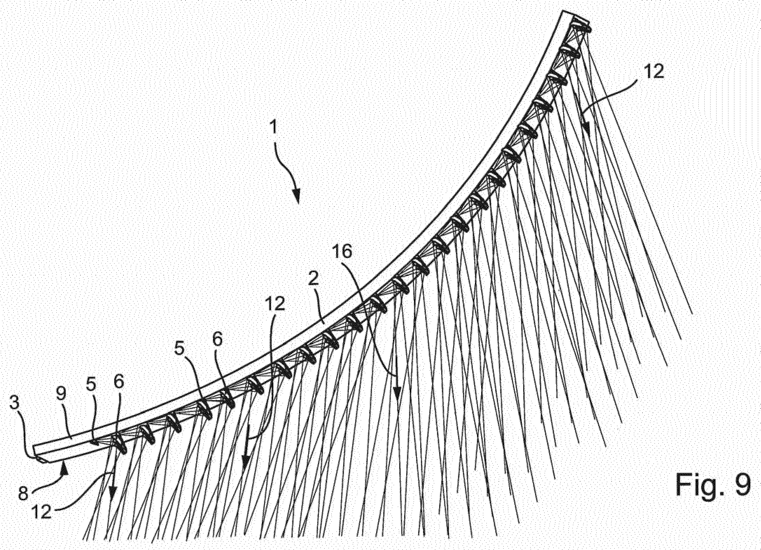

In Figur 9 ist eine weitere Ausführungsform einer Beleuchtungseinrichtung dargestellt, die nicht von der vorliegenden Erfindung umfasst ist. Dabei ist der Lichtleiter 2 vorzugsweise gebogen ausgebildet. Die Lichtquelle 3, vorzugsweise in Form einer LED, liegt links unten am Lichtleiter 2 gegenüber einer als Lichteinkoppelfläche 7 ausgebildeten Stirnseite des Lichtleiters 2. Das in den Lichtleiter 2 eingekoppelte Licht wird von dem gebogenen Lichtleiter 2 mittels Totalreflexion an den Grenzflächen bzw. Wandungen 8, 9 des Lichtleiters 2 nach rechts oben transportiert. Der Lichtleiter 2 hat über seine Längserstreckung betrachtet, ausgehend von der Einkoppelfläche 7 aus einen zunehmenden Durchmesser, so dass die gewölbten Außenseiten 8 (die Seite, auf der der Auskoppelbereich 4 mit den Auskoppelelementen 5 ausgebildet ist, und die gegenüber liegende Seite) nicht parallel zueinander verlaufen.

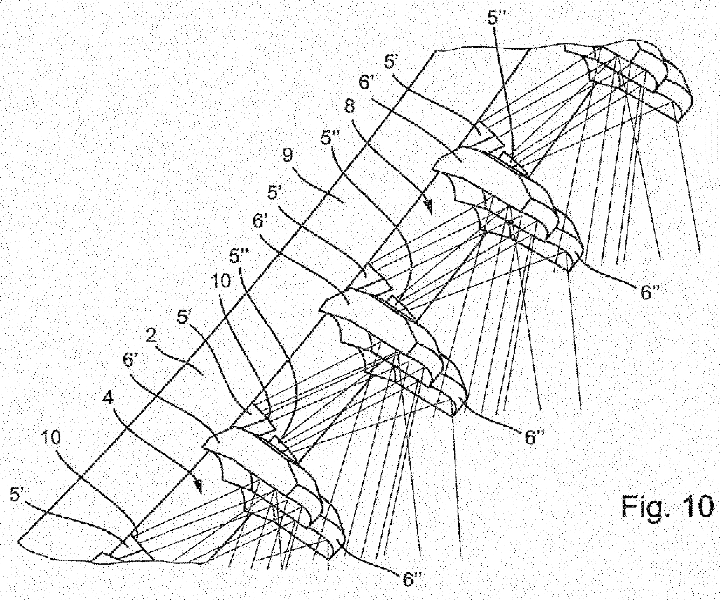

Die Auskoppelelemente 5 sind bei der gezeigten Ausführungsform auf einer gewölbten Außenseite 8 des Lichtleiters 2 angeordnet. Die Auskoppelelemente 5 haben vorzugsweise jeweils die Form eines liegenden Prismas, also einen in einem Längsschnitt durch den Lichtleiter 2 dreieckigen bzw. sägezahnförmigen Querschnitt. Die prismaförmigen Auskoppelelemente 5 sind derart auf der Außenseite 8 des Lichtleiters 2 angeordnet, dass eine Lichtauskoppelfläche 10 im Wesentlichen senkrecht zu einer Flächenerstreckung bzw. einer Tangentialebene der Außenseite 8 angeordnet ist (vgl. Figur 10). "Im Wesentlichen senkrecht" bedeutet, dass die Auskoppelflächen 10 nicht genau senkrecht zu der Flächenerstreckung bzw. der Tangentialebene der Außenseite 8 angeordnet sein müssen, sondern dass Abweichungen von einigen Winkelgrad aus der Senkrechten durchaus möglich sind. Entscheidend ist, dass das ausgekoppelte Licht auf die zugeordnete Reflexionsfläche 6 trifft und von dieser in einer von dem Lichtleiter 2 weg gerichteten Hauptabstrahlrichtung 12 reflektiert wird. Der Vorteil der im Querschnitt dreieckigen bzw. sägezahnförmigen Auskoppelelemente 5 besteht darin, dass sie im Rahmen der Herstellung leichter entformt werden können und aufgrund der gegenüber der Lichtauskoppelfläche 10 vorhandenen schrägen Wand näher unter die angrenzende Reflexionsfläche 6 geschoben werden können. Die Ausgestaltung der Auskoppelelemente 5 mit dreieckigem bzw. sägezahnförmigen Querschnitt erlaubt also eine dichtere Anordnung der einzelnen Auskoppelelement-Reflektor-Einheiten 5, 6 im Auskoppelbereich 4 der gewölbten Außenfläche 8 des Lichtleiters 2.

Die Reflexionsflächen 6 sind vorzugsweise facettiert ausgebildet. Die einzelnen Reflexionsflächen 6 können unterschiedlich ausgebildet sein. Insbesondere ist es möglich, dass die Reflektorachsen der verschiedenen Reflexionselemente 6 nicht alle parallel zueinander verlaufen. Das bedeutet, dass auch die Hauptabstrahlrichtungen 12 der verschiedenen Reflexionsflächen 6, von denen in Figur 9 einige ausgewählte beispielhaft eingezeichnet sind, nicht alle parallel zueinander verlaufen. In der Summe ergibt sich jedoch durch Überlagerung der durch die einzelnen Reflexionsflächen 6 reflektierten Lichtstrahlen 11 ein resultierendes Gesamtlichtbündel der Beleuchtungseinrichtung 1, das die Beleuchtungseinrichtung 1 in einer Gesamt-Hauptabstrahlrichtung 16 verlässt.

In Figur 10 ist ein Ausschnitt der Beleuchtungseinrichtung 1 aus Figur 9 gezeigt. Dabei kann man deutlich erkennen, dass jeweils zwei Auskoppelelemente 5, 5' nebeneinander angeordnet sind und Licht jeweils auf eine eigene Reflexionsfläche 6, 6' senden. Jeweils die nebeneinander angeordneten Reflexionsflächen 6, 6' sind zu einem gemeinsamen Reflektorelement 13 zusammengefasst.

Die in den Figuren 9 und 10 gezeigte Ausführungsform der ist mit ihrem gebogenen Lichtleiter 2 besonders vorteilhaft, da sie einer Pfeilung, wie sie in modernen Scheinwerfern von Fahrzeugen mit flacher, stromlinienförmiger Frontpartie häufig gegeben ist, folgen kann. Ferner erfolgt die Abstrahlung des Lichts in Richtung 12 insbesondere in einem unteren Bereich des Lichtleiters 2 in der Nähe der Lichtquelle 3 in einem Winkel von etwa 90° zu einer Lichtleitrichtung, die von der Lichtquelle 3 links unten entlang dem Lichtleiter 2 nach rechts oben verläuft. Dies wäre mit herkömmlichen, aus dem Stand der Technik bekannten Lichtleitern nicht möglich. Die Beleuchtungseinrichtung 1 aus den Figuren 9 und 10 ermöglicht somit Lösungen für all diejenigen Fälle, in denen die LED 3 (inklusive Elektronik, Platine und Kühlkörper) aufgrund mangelnden Bauraums nicht rechts oben an der anderen Stirnseite des Lichtleiters 2 angeordnet werden kann.

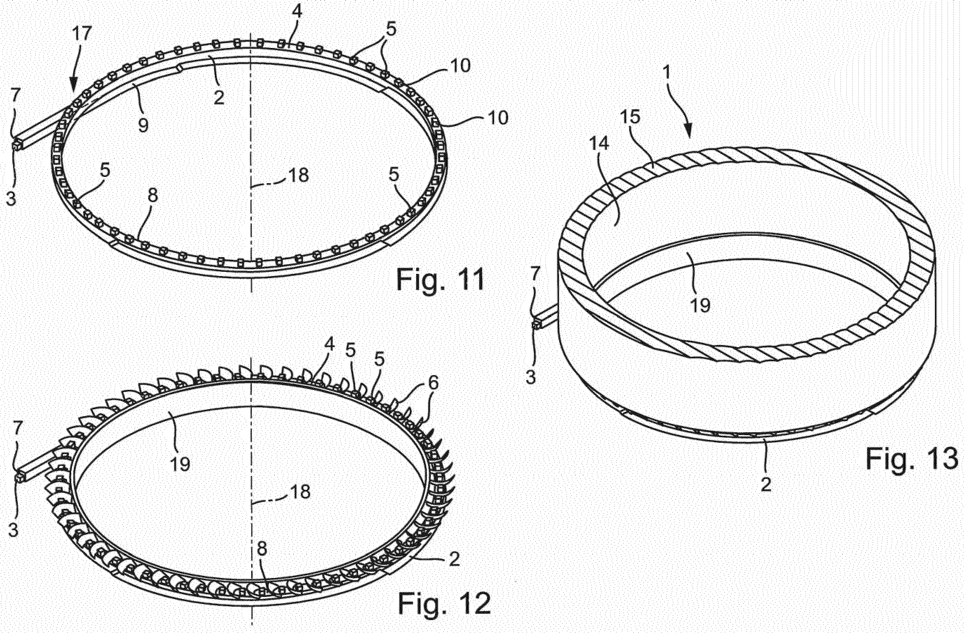

Die Figuren 11 bis 15 zeigen eine weitere Ausgestaltung der Beleuchtungseinrichtung 1, die jedoch nicht von der vorliegenden Erfindung umfasst ist. Die Figuren 11 und 12 zeigen zum Zwecke einer besseren Erläuterung des weiteren Ausführungsbeispiels nur Teile der Beleuchtungseinrichtung 1. Bei dieserr Ausgestaltung verläuft der Lichtleiter 2 kreisringförmig und weist einen im Wesentlichen rechteckigen oder quadratischen Querschnitt auf. Ferner umfasst der Lichtleiter 2 eine sogenannte Y-Verzweigung 17, wobei an einem Arm der Y-Verzweigung 17 die LED 3 angeordnet ist und Licht in eine als Lichteinkoppelfläche 7 ausgebildete Stirnfläche des Arms abstrahlt. Eine solche Y-Verzweigung 17 des Lichtleiters 2 ist an sich aus der DE 10 2008 021 290 A1 bekannt. Bezüglich der Ausgestaltung und der Funktionsweise des Lichtleiters 2 mit der Y-Verzweigung 17 gemäß der Ausführungsform der Figuren 13 bis 15 wird ausdrücklich auf diese Druckschrift Bezug genommen.

Das über die Einkoppelfläche 7 am Arm der Y-Verzweigung 17 in den Lichtleiter 2 eingekoppelte Licht wird in dem kreisringförmigen Lichtleiter 2 mittels Totalreflexion transportiert. An einer Oberseite 8 des Lichtleiters 2 ist eine Vielzahl zueinander beabstandeter Auskoppelelemente 5 angeordnet. Die Auskoppelelemente 5 sind vorzugsweise würfelförmig ausgebildet. Zumindest ein Teil des in den Lichtleiter 2 eingekoppelten Lichts wird über die Auskoppelelemente 5 ausgekoppelt und trifft anschließend auf eine dem jeweiligen Auskoppelelement 5 zugeordnete Reflexionsfläche 6 (vgl. Figur 12). In Figur 11 sind die Reflexionsflächen 6 zur besseren Sichtbarmachung der Auskoppelelemente 5 nicht eingezeichnet.

Wie anhand der Figur 12 gut zu erkennen ist, sind die Reflexionsflächen 6 alle an einem kreisringförmigen Element 19 angeordnet und befestigt, welches als ein Teil in den Lichtleiter 2 eingesetzt werden kann und dann entlang der Innenseite 9 des Lichtleiters 2 verläuft. Die Reflexionsflächen 6 weisen vorzugsweise die Form eines Paraboloids oder eine davon geringfügig abweichende Freiform auf. Die Rotationsachsen der paraboloidförmigen oder paraboloidähnlichen Reflexionsflächen 6 verlaufen vorzugsweise parallel zu einer Rotationsachse 18 des Lichtleiters 2. Die Auskoppelelemente 5 bzw. deren Auskoppelflächen 10 sind jeweils in einem Brennpunkt, einer Brennpunktwolke bzw. einer Brennebene des jeweiligen, ihnen zugeordneten Reflexioinsfläche 6 angeordnet, so dass das Licht nach Verlassen der Reflexionsflächen 6 parallel zur Rotationsachse 18 des Lichtleiters 2 gebündelt ist.

Oberhalb der Reflexionsflächen 6 und in einem Abstand zu der Oberseite 8 des Lichtleiters 2 ist ein weiteres hohlzylinderförmiges Lichtleitelement 14 angeordnet. Die von den Reflexionsflächen 6 reflektierten vorzugsweise parallelen Lichtstrahlen 11 werden über eine an der Unterseite des Lichtleitelements 14 angeordnete Lichteinkoppelfläche (nicht gezeigt) in das Lichtleitelement 14 eingekoppelt. Das eingekoppelte Licht wird in dem weiteren Lichtleiter 14 mittels Totalreflexion zu einer oberen Kreisringfläche 15 geleitet, die als Lichtauskoppelfläche dient. Die Lichtauskoppelfläche 15 des weiteren Lichtleitelements 14 ist mit Streuelementen in Form von Zylinderlinsen versehen, so dass das in das Lichtleitelement 14 eingekoppelte Licht beim Übergang von dem Lichtleitermaterial in die Umgebungsluft gebrochen wird. Auf diese Weise kann das aus dem Lichtleitelement 14 ausgekoppelte Licht zur Erzeugung einer vorgegebenen Lichtverteilung der Beleuchtungseinrichtung 1 gezielt umgeformt werden.

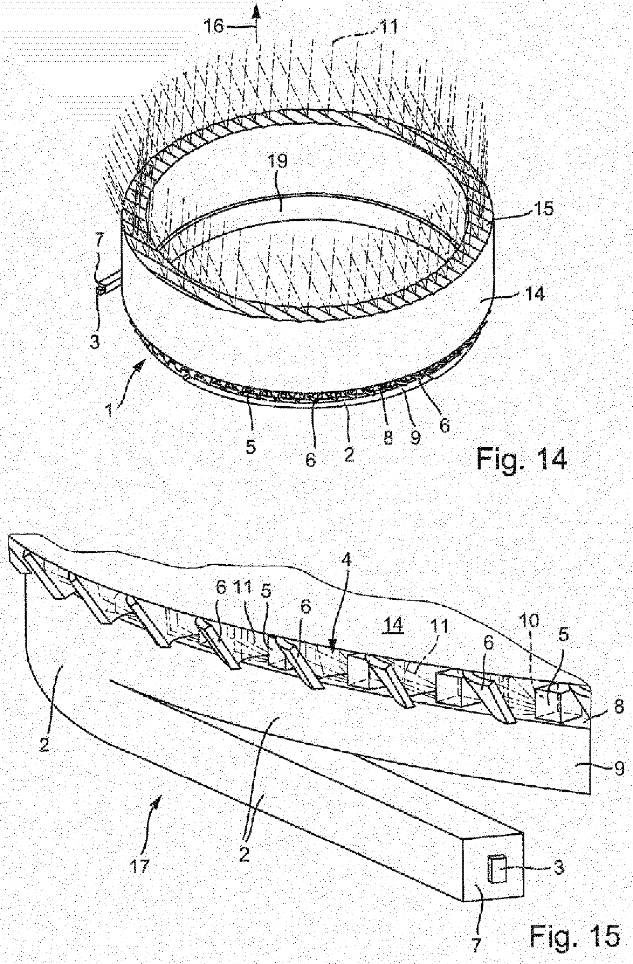

In Figur 14 ist eine Gesamtansicht der Beleuchtungseinrichtung aus den Figuren 11 bis 13 mit beispielhaft eingezeichneten Strahlverläufen dargestellt. Figur 15 zeigt einen Ausschnitt aus Figur 14 im Detail mit beispielhaft eingezeichneten Strahlverläufen.

## Patentansprüche

1. Beleuchtungseinrichtung (1) eines Kraftfahrzeugs, umfassend:
- einen transparenten Lichtleiter (2) mit einem Einkoppelbereich mit mindestens einer Einkoppelfläche (7) zum Einkoppeln von Licht in den Lichtleiter (2) und mit einem Auskoppelbereich (4) zum Auskoppeln von Licht aus dem Lichtleiter (2) durch mindestens eine Auskoppelfläche (10) des Auskoppelbereichs (4) hindurch, wobei der mindestens eine Auskoppelbereich (4) mehrere auf einer Außenseite (8; 9) des Lichtleiters (2) angeordnete Auskoppelelemente (5, 5', 5") umfasst, die jeweils mindestens eine Auskoppelfläche (10) aufweisen, die zumindest in unmittelbarer Nähe zu der Außenseite (8; 9), auf der die Auskoppelelemente (5, 5', 5") angeordnet sind, im Wesentlichen senkrecht zu der Außenseite (8; 9) des Lichtleiters (2) ausgerichtet ist, und
- mindestens eine der mindestens einen Auskoppelfläche (10) -zugeordnete Reflexionsfläche (6) zum Refrekfieren von Licht in eine Hauptabstrahlrichtung (12), die ausgehend von der mindestens einen Reflexionsfläche (6) weg von dem Lichtleiter (2) gerichtet ist, wobei die mindestens eine Reflexionsfläche (6) das über die mindestens eine Auskoppelfläche (10) aus dem Lichtleiter (2) ausgekoppelte Licht derart reflektiert, dass das an der mindestens einen Reflexionsfläche (6) reflektierte Licht den Lichtleiter (2) nicht durchstrahlt, **dadurch gekennzeichnet, dass** der Lichtleiter (2) stabförmig ausgebildet ist und dass die Auskoppelelemente (5, 5', 5") auf drei verschiedenen aneinander grenzenden, Außenseiten (8, 9) des Lichtleiters (2) angeordnet sind, wobei jeweils drei auf verschiedenen Außenseiten (8, 9) des Lichtleiters (2) angeordneten Auskoppelelementen (5, 5', 5") mindestens eine Reflexionsfläche (6) zugeordnet ist.

2. Beleuchtungseinrichtung (1) nach Anspruch 1, **dadurch gekennzeichnet, dass** die Beleuchtungseinrichtung (1) mindestens eine Halbleiterlichtquelle (3), insbesondere mindestens eine Leuchtdiode, zum Aussenden des Lichts aufweist, das über den Einkoppelbereich in den Lichtleiter (2) eingekoppelt wird.

3. Beleuchtungseinrichtung (1) nach Anspruch 1 oder 2, **dadurch gekennzeichnet, dass** der Lichtleiter (2) gebogen ausgebildet ist.

4. Beleuchtungseinrichtung (1) nach einem der vorhergehenden Ansprüche, **dadurch gekennzeichnet, dass** der mindestens eine Einkoppelbereich mindestens eine Stirnfläche (7) des Lichtleiters (2) umfasst.

5. Beleuchtungseinrichtung (1) nach einem der vorhergehenden Ansprüche, **dadurch gekennzeichnet, dass** die Auskoppelelemente (5, 5, 5") quaderförmig, würfelförmig, kugelsegmentförmig, zylindersegmentförmig oder sägezahnförmig ausgebildet sind.

6. Beleuchtungseinrichtung (1) nach einem der vorhergehenden Ansprüche, **dadurch gekennzeichnet, dass** jeweils genau einem der Auskoppelelemente (5, 5', 5") eine separate Reflexionsfläche (6, 6, 6") zugeordnet ist.

7. Beleuchtungseinrichtung (2) nach einem der vorhergehenden Ansprüche, **dadurch gekennzeichnet, dass** die mindestens eine Reflexionsfläche (6, 6, 6") eine Paraboloidform aufweist.

8. Beleuchtungseinrichtung (2) nach einem der Ansprüche 1 bis 6, **dadurch gekennzeichnet, dass** die mindestens eine Reflexionsfläche (6, 6, 6") eine Freiform aufweist.

9. Beleuchtungseinrichtung (1) nach einem der vorhergehenden Ansprüche, **dadurch gekennzeichnet, dass** die mindestens eine Reflexionsfläche (6, 6, 6") zumindest bereichsweise mit Facetten versehen ist.

10. Beleuchtungseinrichtung (1) nach einem der vorhergehenden Ansprüche, **dadurch gekennzeichnet, dass** die Auskoppelfläche (10) des mindestens einen Auskoppelbereichs (4) in einem Brennpunkt, einer Brennpunktwolke oder einer Brennebene der zugeordneten Reflexionsfläche (6, 6, 6") angeordnet ist.

11. Beleuchtungseinrichtung (1) nach einem der vorhergehenden Ansprüche, **dadurch gekennzeichnet, dass** die Beleuchtungseinrichtung (1) ein im Strahlengang des durch die Reflexionsflächen (6, 6, 6") reflektierten Lichts (11) angeordnetes optisches Element aufweist.

12. Beleuchtungseinrichtung (1) nach Anspruch 11, **dadurch gekennzeichnet, dass** das optische Element eine Streuscheibe umfasst, die das hindurchtretende Licht in mindestens einer gewünschten Richtung streut.

13. Beleuchtungseinrichtung (1) nach Anspruch 11, **dadurch gekennzeichnet, dass** das optische Element ein Lichtleitelement (14) umfasst, in welches zumindest ein Teil des durch die Reflexionsflächen (6, 6', 6'') reflektierten Lichts (11) eingekoppelt wird, das eingekoppelte Licht in dem Lichtleitelement (14) mittels Totalreflexion zu einer Auskoppelfläche (15) des Lichtleitelements (14) gelangt und die Auskoppelfläche (15) mit Streuelementen zum Streuen des durch die Auskoppelfläche (15) hindurchtretenden Lichts in mindestens eine gewünschten Richtung versehen ist.

## Claims

1. An illumination device (1) of a motor vehicle, including:
- a transparent light guide (2) having a coupling region with at least one coupling face (7) for coupling light into the light guide (2), and having an uncoupling region (4) for uncoupling light from the light guide (2) through at least one uncoupling face (10) of the uncoupling region (4), wherein the at least one uncoupling region (4) includes a plurality of uncoupling elements (5, 5', 5'') located on an outer side (8; 9) of the light guide (2), which elements each have at least one uncoupling face (10), which at in the immediate vicinity of the outer side (8; 9), on which the uncoupling elements (5, 5', 5") are located, is oriented essentially perpendicular to the outer side (8; 9) of the light guide (2), and
- at least one reflecting face (6), associated with the at least one uncoupling face (10), for reflecting light in a primary projection direction (12) that, beginning at the at least one reflecting face (6), is oriented away from the light guide (2), and the at least one reflecting face (6) reflects the light, uncoupled from the light guide (2) via the at least one uncoupling face (10), in such a way that the light reflected at the at least one reflecting face (6) does not pass through the light guide (2), **characterized in that** the light guide (2) is embodied in barlike form; and that the uncoupling elements (5, 5', 5") are located on three different outer sides (8, 9) of the light guide (2) that abut one another and at least one reflecting face (6) is associated with each of the three uncoupling elements (5, 5', 5'') located on different outer sides (8, 9) of the light guide (2).

2. The illumination device (1) of claim 1, **characterized in that** the illumination device (1) has at least one semiconductor source (3), in particular at least one light emitting diode, for emitting the light that is coupled with the light guide (2) via the coupling region.

3. The illumination device (1) of claim 1 or 2, **characterized in that** the light guide (2) is embodied in curved form.

4. The illumination device (1) of one of the foregoing claims, **characterized in that** the at least one coupling region includes at least one end face (7) of the light guide (2).

5. The illumination device (1) of one of the foregoing claims, **characterized in that** the uncoupling elements (5, 5, 5") are embodied in cuboid or cube-shaped or spherical-segmental or cylindrical-segmental form or in sawtooth form.

6. The illumination device (1) of one of the foregoing claims, **characterized in that** precisely one of the uncoupling elements (5, 5', 5") is each assigned a separate reflecting face (6, 6, 6").

7. The illumination device (2) of one of the foregoing claims, **characterized in that** the at least one reflecting face (6, 6, 6") has a paraboloid form.

8. The illumination device (2) of one of claims 1 through 6, **characterized in that** the at least one reflecting face (6, 6, 6") has a free form.

9. The illumination device (1) of one of the foregoing claims, **characterized in that** the at least one reflecting face (6, 6, 6'') is provided with facets in at least some regions.

10. The illumination device (1) of one of the foregoing claims, **characterized in that** the uncoupling face (10) of at least one uncoupling region (4) is located at a focal point, focal point cloud, or focal plane of the associated reflecting face (6, 6, 6").

11. The illumination device (1) of one of the foregoing claims, **characterized in that** the illumination device (1) has an optical element located in the beam path of the light (11) reflected by the reflecting faces (6, 6, 6").

12. The illumination device (1) of claim 11, **characterized in that** the optical element includes a scattering plate, which scatters the light, passing through it, in at least one desired direction.

13. The illumination device (1) of claim 11, **characterized in that** the optical element includes a light guide element (14), into which at least a portion of the light (11) reflected by the reflecting faces (6, 6', 6'') is coupled, the coupled light in the light guide element (14), by means of total reflection, reaches an uncoupling face (15) of the light guide element (14), and the uncoupling face (15) is provided with scattering elements for scattering the light, passing through the uncoupling face (15), in at least one desired direction.

## Revendications

1. Dispositif d'éclairage (1) d'un véhicule automobile, comprenant:
- un guide de lumière transparent (2) avec une zone d'introduction ayant au moins une surface d'introduction (7) pour introduire de la lumière dans le guide de lumière (2) et avec une zone de sortie (4) pour faire sortir de la lumière du guide de lumière (2) à travers au moins une surface de sortie (10) de la zone de sortie (4), ladite au moins une zone de sortie (4) comportant plusieurs éléments de sortie (5, 5', 5") disposés sur une face extérieure (8; 9) du guide de lumière (2), qui comportent chacun au moins une surface de sortie (10) qui est orientée, au moins à proximité immédiate de la face extérieure (8; 9) sur laquelle les éléments de sortie (5, 5', 5") sont disposés, sensiblement perpendiculaire à la face extérieure (8; 9) du guide de lumière (2), et
- au moins une surface réfléchissante (6) associée à ladite au moins une surface de sortie (10), pour réfléchir de la lumière dans une direction d'émission principale (12) orientée, à partir de ladite au moins une surface réfléchissante (6), en éloignement du guide de lumière (2), ladite au moins une surface réfléchissante (6) réfléchissant la lumière sortant à travers ladite au moins une surface de sortie (10) du guide de lumière (2) de façon telle que la lumière réfléchie sur ladite au moins surface réfléchissante (6) ne traverse pas le guide de lumière (2), **caractérisé en ce que** le guide de lumière (2) se présente sous la forme d'une tige et **en ce que** les éléments de sortie (5, 5', 5") sont disposés sur trois faces extérieures (8, 9) différentes adjacentes du guide de lumière (2), au moins une surface réfléchissante (6) étant associée à un ensemble de trois éléments de sortie (5, 5', 5") disposés sur des faces extérieures différentes (8, 9) du guide de lumière (2).

2. Dispositif d'éclairage (1) selon la revendication 1, **caractérisé en ce que** le dispositif d'éclairage (1) comprend au moins une source de lumière à semi-conducteur (3), notamment au moins une diode luminescente, pour émettre la lumière, laquelle est introduite dans le guide de lumière (2) par la zone d'introduction.

3. Dispositif d'éclairage (1) selon la revendication 1 ou 2, **caractérisé en ce que** le guide de lumière (2) présente une forme cintrée.

4. Dispositif d'éclairage (1) selon l'une des revendications précédentes, **caractérisé en ce que** ladite au moins une zone d'introduction comprend au moins une face frontale (7) du guide de lumière (2).

5. Dispositif d'éclairage (1) selon l'une des revendications précédentes, **caractérisé en ce que** les éléments de sortie (5, 5', 5") présentent une forme parallélépipédique, cubique, de segment de sphère, de segment de cylindre ou de dents de scie.

6. Dispositif d'éclairage (1) selon l'une des revendications précédentes, **caractérisé en ce qu'**il est associée une surface réfléchissante (6, 6', 6") séparée à précisément un des éléments de sortie (5, 5', 5").

7. Dispositif d'éclairage (1) selon l'une des revendications précédentes, **caractérisé en ce que** ladite au moins une surface réfléchissante (6, 6', 6") présente une forme de paraboloïde.

8. Dispositif d'éclairage (1) selon l'une des revendications 1 à 6, **caractérisé en ce que** ladite au moins une surface réfléchissante (6, 6', 6") présente une forme libre.

9. Dispositif d'éclairage (1) selon l'une des revendications précédentes, **caractérisé en ce que** ladite au moins une surface réfléchissante (6, 6', 6") est pourvue, au moins par zones, de facettes.

10. Dispositif d'éclairage (1) selon l'une des revendications précédentes, **caractérisé en ce que** la surface de sortie (10) de ladite au moins une zone de sortie (4) est disposée dans un point focal, un nuage de points focaux ou un plan focal de la surface réfléchissante (6, 6', 6") associée.

11. Dispositif d'éclairage (1) selon l'une des revendications précédentes, **caractérisé en ce que** le dispositif d'éclairage (1) comprend un élément optique disposé dans le trajet optique de la lumière (11) réfléchie par les surfaces réfléchissantes (6, 6', 6").

12. Dispositif d'éclairage (1) selon la revendication 11, **caractérisé en ce que** l'élément optique comprend un disque diffuseur qui diffuse la lumière entrante dans au moins une direction souhaitée.

13. Dispositif d'éclairage (1) selon la revendication 11, **caractérisé en ce que** l'élément optique comprend un élément guide de lumière (14) dans lequel au moins une partie de la lumière (11) réfléchie par les surfaces réfléchissantes (6, 6', 6") est introduite, la lumière introduite arrive dans l'élément guide de lumière (14), par réflexion totale, à une surface de sortie (15) de l'élément guide de lumière (14) et la surface de sortie (15) est pourvue d'éléments diffuseurs pour diffuser la lumière traversant la surface de sortie (15) dans au moins une direction souhaitée.
